**Europäisches Patentamt**

**European Patent Office**

**Office européen des brevets**

(11) Numéro de publication : **0 497 073 A2**

# (12) DEMANDE DE BREVET EUROPEEN

(21) Numéro de dépôt : **91460054.9**

(22) Date de dépôt : **13.12.91**

(51) Int. Cl.⁵ : **H04N 7/10**

(30) Priorité : **14.12.90 FR 9015887**

(43) Date de publication de la demande :
**05.08.92 Bulletin 92/32**

(84) Etats contractants désignés :
**DE ES GB**

(71) Demandeur : **FRANCE TELECOM**
**38-40, rue du Général Leclerc**
**F-92131 ISSY LES MOULINEAUX (FR)**
(71) Demandeur : **TELEDIFFUSION DE FRANCE S.A.**
**21-27, rue Barbès**
**F-92542 Montrouge Cédex (FR)**

(72) Inventeur : **Bordry, Hervé**
**13 rue Papu**
**F-35000 Rennes (FR)**
Inventeur : **Bottin, Daniel**
**Tayée**
**F-35410 St Aubin du Pavail (FR)**
Inventeur : **Launay, Jean-Claude**
**2 allée de l'Elorn**
**F-35760 St Gregoire (FR)**

(74) Mandataire : **Corlau, Vincent**
**c/o Cabinet Vidon Immeuble Germanium 80**
**avenue des Buttes de Coesmes**
**F-35700 Rennes (FR)**

(54) **Réseau domotique large bande câblé multipoints reconfigurable de distribution simultanée et/ou alternative de plusieurs types de signaux.**

(57) L'invention concerne un réseau domotique large bande câblé multipoints reconfigurable de distribution simultanée et/ou alternative de plusieurs types de signaux, notamment des signaux audiovisuels, du type comprenant au moins une ligne (11) de transfert desdits signaux, assurant la mise en relation sélective d'au moins deux appareils ($13_A$, $13_B$, $13_C$) injecteurs et/ou récepteurs desdits signaux sur ledit réseau, par l'intermédiaire de points de branchement ($14_A$, $14_B$, $14_C$), comprenant un module (15) unique spécialisé de gestion des lignes de transfert dudit réseau, connecté uniquement à au moins une ligne (12) de signalisation spécialisée, indépendante desdites lignes (11) de transfert, et effectuant l'émission d'ordres de connexion et/ou de déconnexion sélectives desdits points de branchement ($14_A$, $14_B$, $14_C$) auxdites lignes (11) de transfert, tous lesdits ordres de connexion et de déconnexion étant émis exclusivement par ledit module (15) de gestion dudit réseau, et transmis auxdits points de branchement concernés ($14_A$, $14_B$, $14_C$) sur au moins une ligne (12) de signalisation spécialisée.

L'invention concerne également un procédé de transmission desdits ordres de connexion et de déconnexion.

Fig. 1

Le domaine de l'invention est celui des réseaux câblés de distribution de signaux, notamment pour la distribution simultanée et/ou alternative de plusieurs types de signaux, en particulier des signaux audiovisuels, comprenant entre autres des signaux d'images en bande de base ou encore des signaux numériques de sons et/ou de données. Ce type de réseau est destiné essentiellement aux applications domotiques, par exemple pour la réalisation de réseaux internes de distribution de signaux en habitat individuel ou collectif, dans les entreprises, les hôtels, les hôpitaux, etc... L'invention peut également trouver des applications dans le domaine professionnel, et par exemple dans les studios de télévision.

Plus précisément, l'invention concerne la gestion d'un tel réseau, c'est-à-dire l'établissement et la coupure de liaisons entre les différents appareils connectés au réseau, et la transmission de commandes de connexion à ces appareils.

En effet, l'arrivée des nouveaux services diffusés et interactifs, le nombre croissant d'appareils audiovisuels à l'intérieur de l'habitat, les possibilités offertes par les équipements eux-mêmes imposent la définition et la réalisation d'un véritable réseau domestique à large-bande prolongeant les réseaux externes.

Un tel réseau domestique doit notamment répondre aux questions fondamentales suivantes :

– comment interconnecter simplement les appareils audiovisuels de marques différentes répartis dans son logement ?

– comment faire évoluer l'installation en fonction de la demande de l'usager et des nouveaux services ?

– comment simplifier, voire unifier, la commande des différents appareils installés et la représentation qu'en a l'usager, et ce, dans un environnement réparti?

– comment faire fonctionner ensemble ces mêmes appareils, que ce soit pour un service déclenché en interne ou nécessitant une communication externe au logement ?

Par ailleurs, ces questions doivent être analysées dans trois contextes distincts :

– la domotique individuelle, où les services audiovisuels internes au logement coexistent avec les services proposés de l'extérieur ;

– la domotique collective, qui superpose au contexte précédent les services internes à la communauté tels que le portier vidéo, le contrôle d'énergie des parties communes ou le contrôle d'intrusion ;

– les applications audiovisuelles professionnelles.

De plus, ces réseaux sont à considérer comme la structure d'accueil d'un habitat domotique, intégrant en plus des applications audiovisuelles tous les automatismes en matière de sécurité, de gestion, de communication, ...

Ils imposent la prise en compte, dès la conception, des critères fondamentaux de coût de raccordement, d'acceptabilité du système dans le logement et de son intégration.

Du point de vue de la réalisation matérielle d'un tel réseau, et de sa configuration, on connaît notamment, par le brevet français FR 88 10101, au nom des mêmes déposants, un réseau domotique particulièrement avantageux.

Ce document présente en effet un réseau s'appuyant sur un jeu de paires de conducteurs torsadées, permettant la transmission de signaux analogiques et numériques sur quelques centaines de mètres, à faible coût par rapport à d'autres réseaux mettant en oeuvre des câbles coaxiaux ou des fibres optiques.

Pour tenir compte de l'affaiblissement des paires torsadées en fonction de la distance séparant un ou plusieurs "récepteurs" de l'"émetteur", et pour autoriser le multiprélèvement, chaque "récepteur" comporte des cellules d'égalisation programmables suivant la distance.

La structure retenue pour un tel réseau est généralement une structure en bus, qui est la mieux adaptée à l'environnement, par sa souplesse d'installation dans le logement neuf ou en cours de rénovation, par ses possibilités de multiprélèvement du même signal et par la souplesse d'évolution qu'elle permet par la suite.

Cette structure impose l'utilisation de commutateurs répartis auprès de chaque terminal. Le nombre de paires torsadées est fonction du nombre de signaux à véhiculer de façon simultanée et non plus en fonction du nombre de prises raccordées.

On connaît déjà un procédé de transfert simultané de signaux entre des points de connexion répartis entre des modules d'un ensemble électronique, tel que décrit dans la demande de brevet française 86 05759 déposée le 22.04.86 au nom d'Isaac Lellouche. Selon ce document antérieur, le procédé consiste à relier les modules électroniques par des lignes de transmission de signaux utiles, et des lignes de transmission de signaux de commande d'interconnexion des modules, cette interconnexion étant assurée par des matrices de commutation interposées entre chaque module et les lignes de transmission de signaux utiles. Chaque état d'interconnexion est configurable, point à point, au moyen de codes de définition de chaque connexion transmis sur la ligne de commande.

Ce procédé connu est décrit plus précisément en relation avec la réalisation de câblages de fonds de panier, de chassis ou de baies.

En ce qui concerne l'établissement des connexions entre deux modules, ce document prévoit qu'il se fasse sous la commande de ces modules eux-mêmes. Pour cela, chaque module doit donc disposer d'une mémoire, dans laquelle il conserve l'état des lignes et des connexions à tout moment, et d'une intelligence pour l'émission et la réception de commandes de connexion. diffusées à l'ensemble des modules.

Ce procédé, apparemment très souple, n'est pas sans poser de nombreux problèmes de mise en oeuvre, incompatibles avec des applications domotiques, pour lesquelles deux critères essentiels doivent être respectés : un faible coût de revient des points de raccordement et une grande facilité d'évolution et de modification du réseau.

En effet, il impose tout d'abord l'utilisation de points de connexion complexes et intelligents, donc coûteux, devant suivre en permanence l'état de l'ensemble des connexions, service par service sur les lignes de transfert. Par ailleurs, il est nécessaire de doter chaque point de raccordement de moyens de gestion des conflits, de hiérarchisation et de configuration dans le réseau, non prévus dans le document FR 86 05759. A titre d'exemple, il est clair que dans le cas où deux modules émettent simultanément des ordres de connexion, l'intégrité des ordres n'est plus garantie, et que le système risque de se bloquer complètement. Il est donc nécessaire de permettre à chacun des modules d'effectuer la détection et la résolution des conflits d'accès.

De plus, dans le domaine de la domotique, les appareils connectés sont quelconques, et peuvent avoir des niveaux de hiérarchisation distincts. Le procédé connu décrit ci-dessus ne permet pas de gérer simplement ces problèmes de hiérarchisation.

En d'autres termes, un procédé assurant la diffusion de messages vers l'ensemble des points de connexion d'un système et présentant une intelligence complètement répartie, permettant la mémorisation en chacun de ces points de l'état complet du système est difficilement compatible avec un réseau domotique.

On connaît encore, par le document de rapport de DEA "Traitement de l'information" (Philippe LEBON, DEA Université de Rennes ; 1982-1983) un réseau audiovisuel, comprenant d'une part plusieurs voies banalisées, permettant notamment le transport de signaux d'images, et d'autre part des lignes de commande transportant notamment des ordres de connexion. Ce document décrit également des adaptateurs d'un type équivalent à ceux décrits dans le document FR 86 05759, pour le branchement des appareils au réseau, comprenant une grille de commutation et un micro-processeur, agissant sous la commande des ordres transmis sur les lignes de commande.

A nouveau, ce réseau pose les problèmes de gestion des conflits entre les différents points de connexion, et de hiérarchisation.

On connaît par ailleurs de nombreux types de réseaux locaux, destinés à l'échange de données informatiques à haut débit. Afin de garantir une qualité de service élevée, ces réseaux s'appuient sur la procédure HDLC (high level data link control (commande de liaison de données à haut débit)). Ils font appel à des mécanismes performants de synchronisation, de transparence au niveau bit, de contrôle d'erreur, de reprise sur erreur, de contrôle de flux, d'adressage, etc...

Cette procédure HDLC s'avère être d'une mise en oeuvre relativement complexe, conduisant à un plancher de prix trop élevé pour des applications simples de commande de matrices et de terminaux dans un réseau domotique.

L'invention a notamment pour objectif de pallier ces inconvénients de l'état de la technique.

Plus précisément, un premier objectif de l'invention de fournir un réseau domotique câblé multipoints reconfigurable, à gestion simplifiée des connexions sélectives des points de branchement sur les lignes de transfert. Ainsi, l'invention a pour objectif de fournir un tel réseau, dans lequel les échanges d'ordres sont limités et simplifiés par rapport aux réseaux de types connus.

Un autre objectif de l'invention est de fournir un tel réseau, à coût de revient minimum. L'invention vise notamment à simplifier la construction des points de branchement, qui se trouvent dupliqués plusieurs fois dans un réseau.

L'invention a également pour objectif de fournir un tel réseau, autorisant de façon simple la réalisation d'extensions et de modifications.

L'invention a encore pour objectif de fournir une structure d'accueil pour tout type d'appareil, qu'il s'agisse d'appareils audiovisuels de provenances diverses ou d'appareils électroménagers, de chauffage, de sécurité, de contrôle, etc...

Un autre objectif de l'invention est de fournir un procédé de transmission d'ordres de connexion compatibles avec un tel réseau.

L'invention a également pour objectif de fournir un tel procédé, tenant compte du format des données que peuvent exploiter directement les composants utilisés dans les points de branchement, toujours dans la double optique de simplification et de réduction des coûts de fabrication et de mise en oeuvre.

Ces objectifs, ainsi que d'autres qui apparaîtront par la suite, sont atteints selon l'invention à l'aide d'un réseau domotique large bande câblé multipoints reconfigurable de distribution simultanée et/ou alternative de plusieurs types de signaux, dont notamment des signaux audiovisuels, du type comprenant au moins une ligne banalisée de transfert desdits signaux, assurant la mise en relation sélective d'au moins deux appareils injecteurs et/ou récepteurs desdits signaux sur ledit réseau, par l'intermédiaire de points de branchement, comprenant un module unique spécialisé de gestion des lignes de transfert dudit réseau, connecté uniquement à au moins une ligne de signalisation spécialisée, indépendante desdites lignes de transfert, et effectuant l'émission d'ordres de connexion et/ou de déconnexion sélectives desdits points de branchement auxdites lignes de transfert, tous lesdits ordres de connexion et de déconnexion étant émis exclusivement par ledit module de gestion dudit réseau, et transmis auxdits points de branchement concernés sur lesdites lignes de signalisation spécialisée.

De cette façon, le réseau est contrôlé par un module arbitre unique, qui est le seul à connaître en permanence l'état du réseau. Ce module peut donc gérer de façon simple l'affectation des lignes de transfert, en fonction des requêtes émises par les différents appareils et, éventuellement, des niveaux hiérarchiques affectés à ces appareils. Ainsi, il ne se pose plus de problèmes de conflits entre appareils, l'intelligence nécessaire à la gestion des lignes de transfert étant centralisée.

L'invention met en oeuvre deux types de lignes, tout à fait distinctes : on dispose en effet d'une part de lignes de transfert, les signaux utiles, et d'autre part une ou plusieurs lignes de signalisation, constituant en fait un canal sémaphore indépendant. Dans de nombreux cas, une ligne unique de signalisation est utilisée.

Avantageusement, chacun desdits points de branchement comprend une matrice de connexion pour la mise en contact sélective de façon dynamique de chaque élément de connexion de l'appareil branché audit point de branchement avec chacune desdites lignes de transfert, et des moyens de pilotage de ladite matrice de connexion, agissant sous la commande desdits ordres de connexion et de déconnexion émis par ledit module de gestion dudit réseau.

Un point de branchement comprend donc une intelligence limitée à la commande de la matrice de connexion, à l'émission de requêtes de connexion et à la réception d'ordres émis par le module de gestion du réseau. Il n'a pas besoin de connaître en permanence l'état global du réseau, et n'a donc pas à gérer une mémoire importante, avec tous les risques d'erreur que cela peut sous-entendre, en cas par exemple de mauvaise réception d'un ordre diffusé à l'ensemble des points de branchement.

De façon avantageuse, le réseau comprend également un module de gestion des applications audiovisuelles, assurant par l'intermédiaire desdites lignes de signalisation le contrôle et le pilotage des applications audiovisuelles et le dialogue entre lesdits appareils appartenant auxdites applications, et/ou un module de gestion des applications domestiques, assurant par l'intermédiaire desdites lignes de signalisation le contrôle et/ou le pilotage d'au moins un appareil branché uniquement sur ladite ligne de signalisation.

Il est en effet également intéressant de centraliser la gestion des applications, par type d'applications. Le module de gestion du réseau, élément essentiel de l'invention, reste bien sûr spécifiquement dédié à la gestion des lignes de transfert. Dans la pratique, les différents modules de gestion peuvent toutefois être regroupés dans un même ensemble.

Dans un autre mode de réalisation, les moyens de gestion des applications peuvent être répartis dans différents terminaux, notamment dans le cas des applications audiovisuelles, qui mettent en oeuvre des appareils complexes et coûteux.

Avantageusement, lesdits ordres de connexion et de déconnexion tiennent compte de demandes émises par lesdits appareils et/ou par ledit module de gestion des applications audiovisuelles.

Dans un mode de réalisation préférentiel, lesdits points de branchement sont reliés à ladite ligne de signalisation selon la technique du ET câblé.

Ainsi qu'on le verra par la suite, cela permet en effet la réalisation de points de branchement peu coûteux et efficaces.

L'invention concerne également un procédé de transmission desdits ordres de connexion et de déconnexion sur une ligne de signalisation d'un réseau domotique, assurant la transmission desdits ordres en asynchrone et en bande de base, sous la forme de messages constitués d'une série de mots binaires successifs comprenant chacun :

– un bit de début de mot ("Start") ;
– n bits utiles ;
– un bit délimiteur de message ;
– un bit de fin de mot ("Stop") ;

et dans lequel l'accès audit réseau se fait de façon spontanée, avec détection des collisions par comparaison de chaque mot émis avec le mot reçu.

Ce procédé de transmission, très simplifié par rapport aux procédés connus notamment dans le domaine informatique, est particulièrement avantageux pour les applications domotiques, qui peuvent sans problème fonctionner à de faibles débits et sont limités à des distances de l'ordre de quelques centaines de mètres.

Notamment, la détection des collisions est faite sur chaque mot et non sur chaque bit, comme cela est habituellement le cas dans les réseaux de transmission de données connus.

Préférentiellement, chacun desdits mots comprend 11 bits dont 8 bits utiles. Ce format permet que l'octet utile et le bit délimiteur soient mémorisés directement, sans adaptation, dans l'UART (Universal Asynchronous Receiver-Transmitter (émetteur-récepteur universel asynchrone)) d'un micro-contrôleur classique.

De façon avantageuse, lesdits messages comprennent un premier mot et un dernier mot dont le bit délimiteur est égal à une première valeur binaire, les autres mots compris entre lesdits premier et dernier mots ayant leur bit délimiteur égal à la valeur binaire complémentaire de ladite première valeur binaire, ladite série de mots constitutifs d'un message étant émise en série, avec un temps d'attente entre lesdits mots nul ou inférieur au temps de transfert d'un mot.

Ainsi, par exemple, un message sera constitué d'une série de mots dont le bit délimiteur est égal à 1, compris entre deux drapeaux dont le bit délimiteur est égal à 0.

Préférentiellement, un temps de garde, compris entre le temps de transfert d'un mot et le temps de transfert de deux mots, est ménagé avant et après l'émission de chacun des messages.

Avantageusement, le procédé de transmission comprend des moyens de détection des erreurs, par contrôle de parité, la détection d'une erreur dans un message entraînant l'émission prioritaire d'un mot spécifique ("Abort"), après réception du dernier mot dudit message, demandant la répétition dudit message.

D'autres caractéristiques et avantages de l'invention apparaîtront à la lecture suivante d'un mode de réalisation préférentiel de l'invention, donné à titre illustratif et non limitatif, et des dessins annexés, dans lesquels :

– la figure 1 est le schéma fonctionnel global d'un réseau domotique selon l'invention, comprenant un module de gestion du réseau, un module de gestion des applications audiovisuelles et un module de gestion des applications domestiques;
– la figure 2 présente un schéma de principe d'un point de branchement tel que mis en oeuvre dans le réseau de la figure 1 ;
– la figure 3 illustre la construction d'un "mot" tel qu'utilisé dans le procédé de transmission selon l'invention ;
– la figure 4 illustre la construction d'un message tel qu'utilisé dans ce procédé de transmission, et comprenant une série de mots tels que celui représenté en figure 3.

L'invention a donc pour objectif essentiel de fournir un réseau domotique simplifié et peu onéreux, par rapport aux réseaux connus. Pour ce faire, le réseau de l'invention est piloté, en ce qui concerne l'affectation des lignes de transfert des signaux utiles, par un module arbitre unique, appelé par la suite indifféremment module de gestion du réseau ou module de gestion des lignes de transfert. Cette architecture permet de réduire la complexité des dialogues et de la gestion.

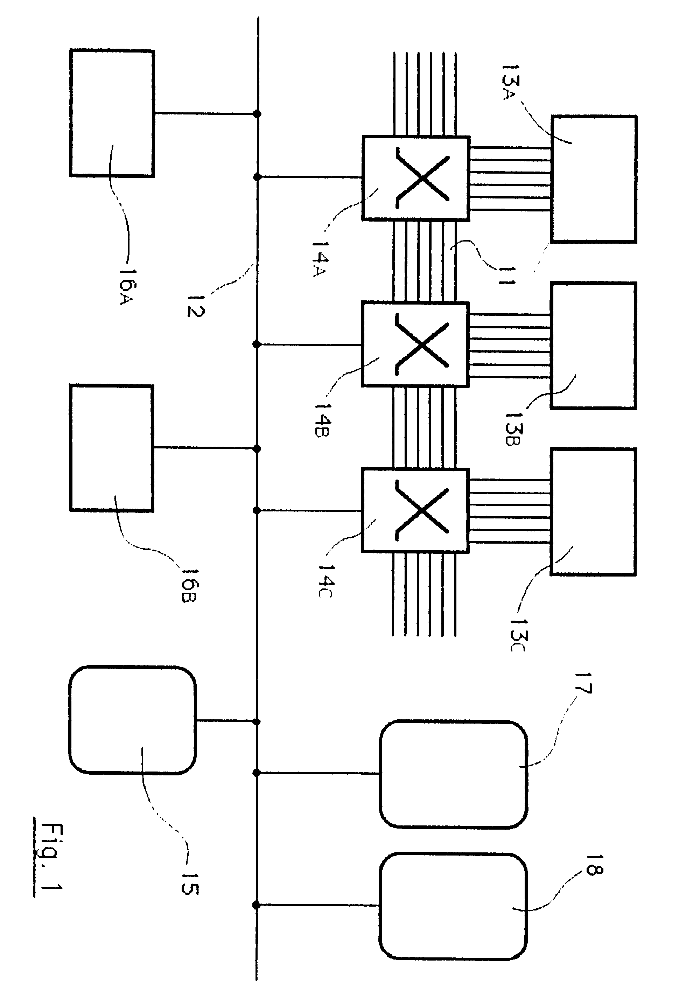

La figure 1 présente un exemple de réalisation d'un tel réseau. Il s'organise autour d'un câble en bus qui banalise le rôle de chaque prise et qui offre une souplesse accrue pour la gestion physique du réseau. Le câble comprend un ensemble 11 de lignes de transfert large-bande à paires torsadées partageable dynamiquement en fonction de la demande de service. Une ou plusieurs lignes spécifiques 12, dites lignes de signalisation, se chargent de transporter toutes les commandes à destination des unités $14_A$,

$14_B$, $14_C$ d'adaptation nommées points de branchement, ou encore modules de commutation.

Sur ces points de branchement $14_A$, $14_B$, $14_C$ se raccordent les terminaux $13_A$, $13_B$, $13_C$ au moyen d'interfaces normalisées (prise péritélévision, prise cinch, etc...). Chaque point de branchement se raccorde sur l'ensemble des paires du câble, sans dérivateur.

Le support de transmission est avantageusement la paire torsadée, tel que décrit dans le brevet FR 88 10101 sus-mentionné. Il s'agit en effet du support le plus simple et le plus économique, moyennant un système d'égalisation pour compenser les affaiblissements du signal en fonction de la distance. Il convient bien aux transmissions analogiques et numériques sur de courtes distances de l'ordre de quelques centaines de mètres.

Par ailleurs, ce type de support permet d'utiliser des connecteurs à contacts auto-dénudants, c'est-à-dire se montant sans rupture du conducteur, facile à installer et résolvant ainsi le problème du multiprélèvement.

Le câble comprend un faisceau 22 de lignes de transfert large bande à paires torsadées partageables dynamiquement en fonction de la demande et exploité en signalisation par un canal sémaphore constitué d'une paire 12 torsadée particulière.

Le nombre de lignes 11 de transfert est fonction du nombre de signaux simultanés pouvant transiter sur le câble.

L'échange d'informations analogiques et/ou numériques sur les lignes 11 du bus se fait avantageusement en bande de base. La disponibilité de l'interface PERITEL en bande de base, la prise en compte des nouvelles techniques de codages (D2MAC, HDMAC, Son numérique) et la lourdeur et la dégradation du signal apportées par la cascade de traitements modulation/sélection/démodulation, feront préférer l'interconnexion spatiale en bande de base dans la plage de fréquences 0 - 12 MHz.

La liaison de signalisation sur la ligne 12 met avantageusement en oeuvre une transmission de données à faible débit (4800 ou 9600 b/s par exemple). Il en découle que la transmission s'effectue en bande de base, à l'alternat sur une paire, codée NRZ (non retour à zéro), en mode symétrique à faible niveau.

La répartition des modules de commutation auprès des terminaux a deux conséquences. Il faut d'une part réaliser un canal sémaphore, dit canal de signalisation en mode message véhiculant sous forme de messages structurés en paquets (train numérique comportant : adresse, éléments de procédure, informations) les ordres de commande nécessaires à la gestion des organes de commutation et d'égalisation.

D'autre part, les modules de commutation répartis doivent être téléalimentés pour avoir des états stables sur les commutateurs, afin d'éviter le problème du rebouclage par les fils d'alimentation.

Notamment pour des raisons de sécurité de fonctionnement et pour ne pas avoir à dupliquer toutes les tables de gestion du réseau et des applications, l'invention prévoit, selon sa caractéristique essentielle, de centraliser les fonctions primordiales. La gestion du réseau est donc assurée par une unité 15 unique de gestion des lignes de transfert 11. La gestion des applications est faite de façon centralisée dans un module 18 de gestion des applications audiovisuelles ou un module 17 de gestion des applications domestiques.

Le module 15 de gestion du réseau est raccordé au réseau uniquement par la ligne de signalisation, et assure :

   – la réception et l'analyse de requêtes en provenance de l'unité de gestion d'application et/ou d'appareils ;

   – la gestion des tables d'occupation des lignes de transfert ;

   – allocation de l'identification des terminaux raccordés ;

   – la fourniture des réponses des lignes utilisées.

Il gère une seule requête à la fois. En effet, pour ne pas implanter un système multi-utilisateur dans l'unité 15 de gestion des lignes de transfert, les points de branchement $14_A$, $14_B$, $14_C$, assurent la saisie et la mise en forme des messages de commande à destination des unités 15, 17, 18 de gestion. Ces messages peuvent être préformatés dans une zone mémoire accessible lors de la configuration du point de branchement en utilisant un appareil émetteur, tel que par exemple un Minitel (marque déposée).

L'activité d'interconnexion de deux terminaux $13_A$, $13_B$ se décompose en deux activités superposées : la commutation et la mise à jour des tables de gestion des lignes de transfert (table d'occupation des lignes par exemple).

Cette seconde activité, demandant plus de performance, de puissance de traitement et de sécurité, est centralisée dans le module 15 de gestion du réseau qui collecte les messages en provenance des modules de gestion des applications 17, 18 et/ou des terminaux, les analyse en temps réel, choisit les lignes de transfert à utiliser et retourne les paramètres nécessaires vers les commutateurs répartis $14_A$, $14_B$, $14_C$.

Les mécanismes de gestion de la ressource lignes de transfert 11 ne sont pas dupliqués dans les points de branchement $14_A$, $14_B$, $14_C$. Il n'y a donc pas de risque de mauvais arbitrage. La mise à jour des tables n'est pas diffusé à l'ensemble de ces points de branchement. Les échanges sont réalisés en mode point à point.

Il s'agit donc d'un système semi-décentralisé dans lequel la saisie des informations de commande de l'usager est faite de façon autonome et décentralisée auprès, par exemple, du terminal $13_A$. Le point de branchement $14_A$ transmet de façon spontanée ces informations sous forme de messages élaborés vers le module 18 de gestion des applications audiovisuelles, qui transmet à son tour une requête au module 15 de gestion des lignes de transfert, où s'effectuent les traitements nécessaires, puis l'émission d'ordres de connexion vers les points de branchement $14_A$, $14_B$, $14_C$ concernés.

Cette structure, plus simple et plus économique qu'une structure entièrement répartie, s'avère par ailleurs mieux adaptée à l'utilisation de composants micro-contrôleur auprès des terminaux en liaison avec un organe unique de type micro-ordinateur demandant plus de puissance de traitement et de sécurité pour gérer les ressources communes.

Le module 15 de gestion des commutateurs gère uniquement la ressource "lignes de transfert". Il attribue et indique l'état d'occupation des lignes de transfert. Il est indépendant des terminaux $13_A$, $13_B$, $13_C$ et des services.

A titre d'exemple, on présente un mode de réalisation possible d'une connexion entre terminaux. Lorsqu'un usager veut créer une connexion large bande entre appareils, il correcte son Minitel (Marque déposée) sur le point de branchement le plus proche de lui. La phase de connexion fait apparaître la carte des équipements audiovisuels connectés sur le bus et susceptibles d'être mis en connexion.

Cette carte est obtenue, à la mise en route du système ou à l'initiative de l'usager, par l'émission de la requête "Qui est raccordé sur le bus ?" diffusée sur le réseau. Chaque point de branchement raccordé sur le bus retourne son identifiant de terminal, ou TEI, l'adresse logique et le statut des terminaux qui sont connectés.

Une primitive spécifique permet de connaître le mnémonique, le profil standard d'utilisation et la position d'un appareil. Deux autres primitives permettent de repérer les émetteurs et les récepteurs des signaux large bande sur le bus.

L'usager peut établir une connexion entre appareils en émettant deux requêtes de connexion spécifiques comportant le numéro de TEI du point de branchement initiateur de la requête, le numéro de TEI du point de branchement distant, l'adresse logique du terminal distant, le profil utilisé, le statut de la connexion ainsi que la liste des lignes utilisées sur le bus.

Un accusé de réception émis par le terminal distant est retourné au demandeur.

Dans le cas où la requête du demandeur ne spécifie pas la liste des lignes utilisées, le terminal distant retourne une réponse "je suis connecté sur les lignes ..."

Au préalable, le terminal distant émetteur large bande aura bien sûr demandé à la station arbitre une liste de lignes libres en fonction du profil.

Un temporisateur T1 de surveillance est mis en route à chaque requête, afin de pouvoir arrêter le processus dans le cas où le terminal distant n'est plus actif sur le bus.

En plus du module 15 de gestion des lignes de transfert, le réseau de l'invention peut comprendre un module 18 de gestion des applications audiovisuelles. Il est raccordé au réseau uniquement par la ligne 12 de signalisation, et assure la gestion complète d'une application en tant que système, et le dialogue avec les terminaux $13_A$, $13_B$, $13_C$ appartenant à l'application. Ce module 18 peut par exemple gérer notamment les services suivants :

– des services de diffusion et de distribution des images et du son :

– Etablir ou rompre des connexions dites à large bande entre tous types de terminaux audiovisuels ayant une interface "Péritélévision" et ce, quel que soit le point de branchement $14_A$, $14_B$, $14_C$ utilisé ;

– Ajouter ou retirer un récepteur audiovisuel sur une connexion existante (diffusion de programme) ;

– Pouvoir véhiculer la télécommande des appareils ;

– Pouvoir gérer les canaux de la prise "PERITEL" (Vidéo, Sons, RVB) de façon indépendante (visualisation de programmes audiovisuels provenant de sources différentes, vidéo composite et chaîne HIFI par exemple) ;

– Véhiculer la télécommande des appareils en fonction des priorités.

– des services complémentaires :

– Verrouiller ou non des connexions à large bande ;

– Attribuer des niveaux de priorité sur les équipements "émetteur" et "récepteur" (confidentialité, code parental) ;

– Supprimer et créer des connexions en fonction des niveaux de priorité en cas de saturation du bus ou des équipements ;

– Véhiculer des informations numériques en mode transparent (par exemple les clés de désembrouillage ...).

– des téléservices :

– Téléprogrammation d'une chaîne audiovisuelle ;

– Téléachat ;

– Télésurveillance.

La sélection d'un programme audiovisuel dans un tel environnement réparti nécessite la mise en oeuvre d'un canal de commande associé au canal large bande. Ce canal de commande, souvent nommé "voie interactive", véhicule des ordres de sélection de programme et de commande par l'usager. Il peut être superposé ou non au canal large bande.

Avantageusement, cette voie interactive utilise un canal numérique commun partagé pour l'ensemble des télécommandes. En ayant une procédure simple d'identification, les différents ordres de sélection et de commande peuvent être multiplexés sur le canal 12 utilisé pour l'échange des ordres de commande des commutateurs répartis.

Il est également envisageable que le canal de commande utilise une ligne de transfert en mode transparent, ce qui correspond à un simple déport physique. A partir du point de réception, l'usager utilise le clavier de télécommande de l'équipement source pour réaliser la connexion à un programme.

Le réseau de l'invention comprend avantageusement également un ou plusieurs modules 17 de gestion des applications domestiques. En effet, le réseau à paires torsadées peut être une structure d'accueil pour l'ensemble des applications domotiques dans la mesure où les applications ne se perturbent pas mutuellement.

Pour chaque service, la gestion de l'application est assurée par un gestionnaire 17 d'application centralisé ou réparti assurant le dialogue et le traitement du système. Par exemple, une application de sécurité requiert un système central performant gérant des capteurs et actionneurs de faible coût.

Les gestionnaires 17 d'application se raccordent au réseau au moyen de la ligne de signalisation 12. Ils ne sont pas connectés aux lignes 11 de transfert.

Des éléments de procédure d'extension permettent l'utilisation de protocole multipoint/multipoint et ainsi l'éclatement du gestionnaire d'application dans des points de branchement spécialisés.

Un module 17 de gestion des applications domestiques peut par exemple contrôler un ensemble d'appareils $16_A$, $16_B$ uniquement reliés à la ligne 12 de signalisation.

Il est à noter en effet que dans ce type de réseau, seul un certain nombre de terminaux sont effectivement reliés à l'ensemble des lignes de transfert 11. Ni les modules 15, 17, 18 de gestion, ni les terminaux $16_A$, $16_B$ pour lesquels cela n'est pas nécessaire ne le sont. Cela permet de prévoir deux types de points de branchement, dont l'un très peu coûteux.

Il apparaît bien clairement que les lignes 11 de transfert et la ligne 12 de signalisation sont complètement indépendantes. La ligne 12 peut être avantageusement une paire particulière d'un faisceau de lignes dont les autres paires sont affectées au transfert large bande. Bien sûr, dans le cas où le trafic d'informations le justifie, il peut y avoir plusieurs lignes 12 de signalisation distincte.

La ou les lignes 12 de signalisation peuvent être également physiquement distinctes des lignes 11 de transfert, et éventuellement parcourir un trajet plus important, par exemple pour la commande et le contrôle de simples appareils domestiques $16_A$, $16_B$.

Dans un autre mode de réalisation, cette ligne 12 de signalisation partagée peut être remplacée par un réseau en étoile, chacun des points de branchement 14$_A$, 14$_B$, 14$_C$ étant alors relié au module 13 de gestion du réseau par une ligne de signalisation distincte.

La figure 2 présente de façon plus détaillée un point de branchement 14. Fonctionnellement, un point de branchement 14 fait partie du terminal 13. Il comprend une matrice de commutation 21 qui permet la connexion banalisée d'une des lignes 23 issues du terminal 13 à l'une quelconque des lignes 11 du réseau. Cette matrice est pilotée par un micro-contrôleur 22, qui peut émettre des requêtes vers le module 18 de gestion des applications audiovisuelles du réseau, en fonction des besoins du terminal 13, et recevoir des ordres émis par le module 15 de gestion du réseau.

Avantageusement, le micro-contrôleur 22 est d'un type connu, comprenant une UART, dont le rôle apparaîtra mieux par la suite, pour la gestion de la signalisation.

Le point de branchement 14 offre une prise spécifique pour le réseau à paires. Installé directement sur le faisceau de paires torsadées sans dérivateur, il peut assurer six fonctions importantes :
  – une adaptation des signaux normalisés du terminal raccordé aux exigences de transmission des paires torsadées ;
  – une fonction d'égalisation sur les accès récepteur en fonction de la longueur le séparant de l'accès émetteur ;
  – une commande de signaux d'entrée/sortie tout ou rien ;
  – une gestion des commutateurs répartis ;
  – le transfert des messages de commande du réseau et des terminaux sur le canal de signalisation ;
  – une interface de dialogue usager simplifiée compatible Minitel.

On présente ci-dessous un exemple avantageux de protocole de signalisation pouvant être mis en oeuvre dans un réseau selon l'invention.

Du fait de la dissociation des lignes de transfert 11 et du canal sémaphore 12, la liaison de signalisation peut être organisée de manière à constituer un véritable réseau d'échange. La fonction de signalisation peut alors recouvrir non seulement l'établissement et la rupture des liaisons de transfert mais encore l'ensemble des échanges relatifs à l'exploitation des points de branchement et au transfert des commandes des terminaux.

La ligne de signalisation 12, commune à l'ensemble des points de branchement 14$_A$, 14$_B$, 14$_C$ et des modules 15, 17, 18 de gestion, joue le rôle d'un réseau local privé de petites dimensions (quelques centaines de mètres) sur lequel transitent des messages de dialogue suivant une procédure en point/multipoint.

Les protocoles de signalisation pour les réseaux publics et les réseaux locaux s'appuient sur la procédure HDLC, afin de garantir une qualité de service élevée pour les échanges d'informations en grande quantité.

Sa mise en oeuvre est lourde et conduit à un plancher de prix trop élevé pour des applications simples de commande de matrices et de terminaux dans un réseau domotique.

L'utilisation d'un protocole structuré OSI, plus simple au niveau physique (utilisation du composant UART très souvent intégré au micro-contrôleur), permet de réduire de façon notable le nombre de composants et leur coût tout en conservant une cohérence avec les protocoles des réseaux externes (X25, RNIS).

L'architecture d'un tel système de signalisation peut-être décrit fonctionnellement à l'aide du modèle de référence OSI.

Le niveau 1 de ce modèle est constitué par la liaison de transmission de données proprement dite comprenant le support physique de transmission numérique (une paire torsadée) raccordant des points de branchement et des modules de gestion, ainsi que les circuits d'accès à ce support. Il utilise les niveaux électriques définies dans la norme CEI 1030 pour les interfaces.

Le niveau 2 assure la gestion de la procédure d'échange des messages sur la liaison, c'est-à-dire les fonctions d'identification, de contrôle d'erreur, la politique d'accès au support qui doit garantir qu'un seul émetteur de messages est en train de transmettre à la fois. La sélection entre services est faite dans ce niveau.

Il utilise le format de trame non numérotée assurant un transfert sans accusé de réception du canal D du RNIS.

Le niveau 3 gère le transfert des messages utilisant la technique de "datagramme" et plus précisément le mode non connecté.

Le traitement sémantique des messages est localisé dans le niveau supérieur qui correspond donc aux entités générant les messages.

Les échanges d'information se font en mode point à point entre le point de branchement et l'unité de gestion.

Les messages sont codés NRZ (non retour à zéro) et transmis à un débit de 4800 ou 9600 b/s en bande de base en mode symétrique de faible niveau (conformément à la norme CEI 1030).

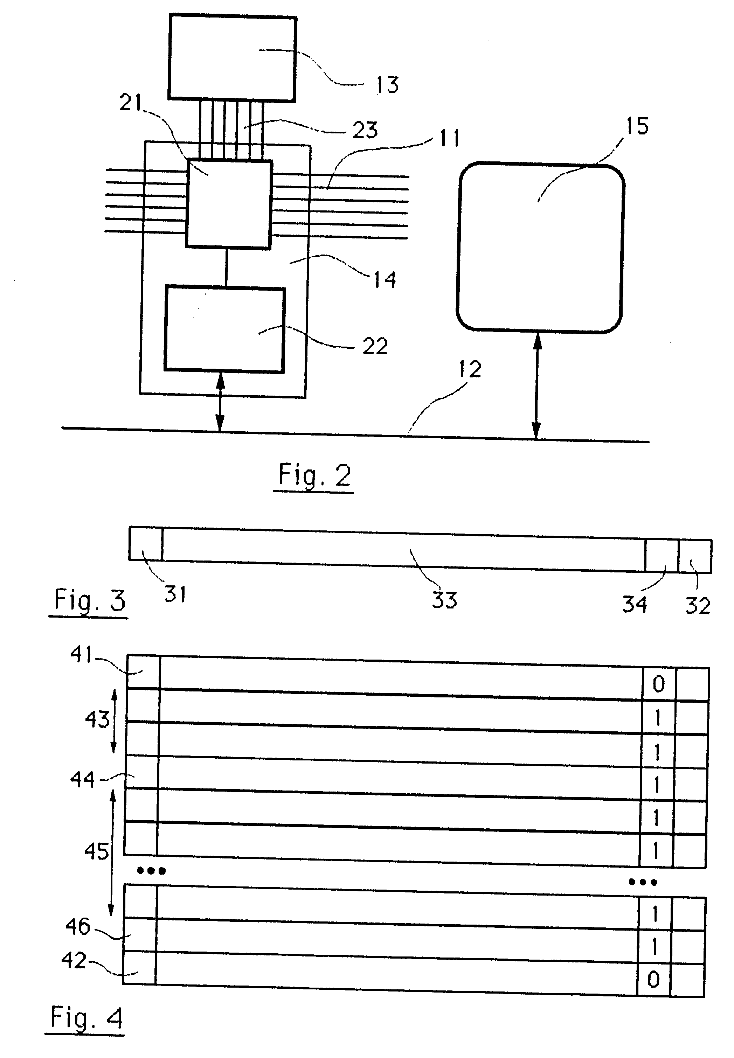

Plus précisément, les différents ordres de connexion et de déconnexion sont transmis sous forme de messages, constitués eux-même de mots. Les formats des mots et des messages sont respectivement illustrés en figures 3 et 4.

Ainsi que cela est illustré en figure 3, chaque mot est transporté sous forme de 11 bits consécutifs, comprenant, de façon à assurer la synchronisation octet, un bit 31 de "start" (début de mot) et un bit 32 de "stop" (fin du mot). Il comprend également 8 bits utiles 33, et un neuvième bit délimiteur 34, utilisé pour la synchronisation des messages.

Le format de ces mots est compatible avec les UART intégrés dans les contrôleurs de communication connus. Ainsi, il n'y a pas besoin d'effectuer une quelconque adaptation entre ces contrôleurs et la ligne de signalisation.

Comme représenté en figure 4, un message est délimité par deux mots drapeaux 41, 42, dont le neuvième bit est positionné à 0. L'ensemble des autres mots du message ont un neuvième bit égal à 1. De cette façon, la synchronisation message est très simple.

Un message est avantageusement constitué des six champs suivants :

– les délimiteurs de début 41 et de fin 42 de message (drapeaux) ;

– le champ d'adresse 43 qui se compose de 2 octets. Il identifie la liaison de données sur laquelle les messages sont émis et reçus. Le premier octet contient l'identification du service codée sur 4 bits et indique par là même l'entité fonctionnelle de l'unité de gestion de l'application, 2 bits de priorité pour les différents niveaux d'échange des messages, le bit Commande/Réponse et un bit indiquant le premier octet du champ. Le second octet contient l'identification du point de branchement terminal de la liaison, c'est-à-dire le destinataire d'un message de commande ou l'expéditeur d'un message de réponse.

– le champ de contrôle 44 indiquant le type de trame échangée (trame non numérotée). 2 types de trame sont utilisés : "XID" pour la gestion des identificateurs, et "UI" pour le transfert d'information sans accusé de réception.

– le champ information 45 se compose essentiellement de l'identification logique des terminaux à mettre en liaison, du profil utilisé, des services complémentaires mis en oeuvre. La longueur maximum du champ est de 32 octets.

– le champ 46 de contrôle d'erreur de transmission (un octet).

Les messages sont échangés sous forme de question/réponse avec possibilité d'envoi spontané. Le temps maximum pour un message de 32 octets utiles est de l'ordre de 100 ms, compte tenu des temps d'écoute préalable et d'attente d'acquittement sur erreur.

La détection des erreurs est faite par un contrôle de parité. En cas d'erreur une information d'ABORT est émise de façon prioritaire après le drapeau de fin de message. De même, la détection d'une collision impose l'émission d'une information d'ABORT.

L'information d'ABORT est un mot comprenant un octet utile égal à 00h et le neuvième bit égal à 0.

La réception d'un "ABORT" a pour conséquence d'annuler le dernier message reçu et de demander la répétition du message.

Tout point raccordé peut émettre un message de façon spontanée. Il y a donc nécessité de garantir qu'un seul utilisateur est en train d'émettre à la fois pour ne pas superposer les signaux.

Pour cela, l'invention utilise la technique d'accès aléatoire avec écoute du support connue sous le nom de CSMA/CD défini à l'ISO.

Les émetteurs sont raccordés suivant la technique du "ET CABLE". Compte tenu de la taille du réseau et du débit de la transmission, le temps de propagation du signal est négligeable.

Au lieu d'effectuer une détection de collision au niveau bit, en comparant à chaque instant le bit reçu et le bit émis, la recherche de collision est effectuée au niveau octet.

Un point de branchement prêt à émettre un message écoute préalablement le canal pendant un temps équivalent à deux caractères et transmet le message si le canal est libre. Si par contre une activité existe sur la ligne, il continue à écouter jusqu'à ce que le canal soit libre, puis transmet.

Pendant la transmission, l'émetteur écoute la ligne. Si l'octet reçu en réception est différent de l'octet émis, il y a collision entre deux messages. Il génère alors une séquence d'"ABORT" pour indiquer la collision détectée. Le délai aléatoire de retransmission est compris entre 1 et 2 caractères. A la fin de ce temps, l'émetteur émet de nouveau si la ligne est libre. S'il n'a pas réussi à prendre la ligne de signalisation, il continue à écouter jusqu'à ce que le canal soit libre. Le temps d'écoute préalable correspond au délai de retransmission pour bien désynchroniser les échanges et ainsi éviter les nouvelles collisions.

Si après trois essais, le message est encore en collision, l'émetteur abandonne sa transmission. Une reprise devra s'effectuer à partir des niveaux de protocole supérieur.

Tout point de branchement se voit affecter une adresse physique allouée dynamiquement par un algorithme automatique.

Le point de branchement diffuse une recherche de numéro libre en émettant un message comportant un identificateur de service gestion de réseau, un identificateur de diffusion, un numéro préféré et une référence aléatoire. Si aucune trame d'identité n'est refuser pendant un temps T fixe, il y a ré-émission de trame de demande avant de décider que le numéro est disponible. Si la trame est refusée, il existe déjà un numéro identique sur le réseau. Il est donc nécessaire de refaire une demande d'affectation en incrémentant le numéro d'identification préféré.

Dans le cas où un gestionnaire surpervise le réseau, le numéro peut être attribué dès la réception du message d'acceptation.

Conformément aux règles de la procédure HDLC, les messages de commande utilisent l'adresse de l'entité homologue de la couche de liaison de données alors que les réponses utilisent l'adresse de l'entité qui les émet. Le bit C/R de l'octet d'adresse indique le sens des messages.

Tout terminal raccordé au réseau au travers d'un point de branchement se voit attribuer, dans le service considéré, une adresse logique.

Elle se compose, pour le service audiovisuel, d'un identifiant type de terminal et d'un numéro dans le type. Le format est conforme au plan d'adressage des terminaux audiovisuel défini dans la norme CEI 1030. De plus, un mnémonique, choisi par l'utilisateur lors de la configuration au moyen du Minitel, repère cette adresse logique.

Les primitives d'échange sont spécifiques de l'application. On distingue notamment les primitives suivantes :
– la primitive "Connexion" ;
– la primitive "Déconnexion" ;
– la primitive "Purge" ;
– la primitive "Info" ;
– la primitive "Reset" ;
– la primitive "Liste des terminaux" ;
– la primitive "Liste des émetteurs" ;
– la primitive "Liste des récepteurs" ;
– la primitive "Qui est derrière le point de branchement ?".
– la primitive "Qui est sur la ligne de transfert n° ?" ;

Il est clair que l'invention ne se limite pas au mode de réalisation décrit ci-dessus. L'invention concerne bien sûr tous les procédés de transmission en asynchrone sous forme de messages appliqués à des réseaux domotiques à module arbitre unique, et plus généralement tous les réseaux domotiques comprenant un ensemble de lignes de transfert large bande dont les connexions sont assurées sélectivement sous la commande d'un module unique de gestion de ces lignes de transfert transmettant des ordres de connexion à des points de branchement sur au moins une ligne spécialisée.

**Revendications**

1.  Réseau domotique large bande câblé multipoints reconfigurable de distribution simultanée et/ou alternative de plusieurs types de signaux, dont notamment des signaux audiovisuels, du type comprenant au moins une ligne (11) banalisée de transfert desdits signaux, assurant la mise en relation sélective d'au moins deux appareils ($13_A$, $13_B$, $13_C$ ; 13) injecteurs et/ou récepteurs desdits signaux sur ledit réseau, par l'intermédiaire de points de branchement ($14_A$, $14_B$, $14_C$ ; 14), caractérisé en ce qu'il comprend un module (15) unique spécialisé de gestion des lignes de transfert dudit réseau, connecté uniquement à au moins une ligne (12) de signalisation spécialisée, indépendante desdites lignes (11) de transfert, et effectuant l'émission d'ordres de connexion et/ou de déconnexion sélectives desdits points de branchement ($14_A$, $14_B$, $14_C$ ; 14) auxdites lignes (11) de transfert, tous lesdits ordres de connexion et de déconnexion étant émis exclusivement par ledit module (15) de gestion dudit réseau, et transmis auxdits points de branchement concernés ($14_A$, $14_B$, $14_C$ ; 14) sur lesdites lignes (12) de signalisation spécialisée.

2.  Réseau selon la revendication 1, caractérisé en ce que chacun desdits points de branchement (14) comprend une matrice de connexion (21) pour la mise en contact sélective de façon dynamique de chaque élément de connexion de l'appareil (13) branché audit point de branchement (14) avec chacune desdites lignes (11) de transfert, et des moyens (22) de pilotage de ladite matrice de connexion (21), agissant sous la commande desdits ordres de connexion et de déconnexion émis par ledit module (15) de gestion dudit réseau.

3.  Réseau selon l'une quelconque des revendications 1 ou 2, caractérisé en ce qu'il comprend également un module distinct (18) de gestion des applications audiovisuelles, assurant par l'intermédiaire desdites lignes (12) de signalisation le contrôle et le pilotage des applications audiovisuelles et le dialogue entre lesdits appareils ($13_A$, $13_B$, $13_C$) appartenant auxdites applications, et/ou un module distinct (17) de gestion des applications domestiques, assurant par l'intermédiaire desdites lignes (12) de signalisation le contrôle et/ou le pilotage d'au moins un appareil ($16_A$, $16_B$) branché uniquement sur lesdites lignes (12) de signalisation.

4.  Réseau selon l'une quelconque des revendications 1 à 3, caractérisé en ce que lesdits ordres de connexion et de déconnexion tiennent compte de demandes de connexion et de déconnexion émises par lesdits appareils ($13_A$, $13_B$, $13_C$ ; 13) et/ou par ledit module (18) de gestion des applications audiovisuelles.

5.  Réseau selon l'une quelconque des revendications 1 à 4, caractérisé en ce que lesdits points de branchement sont reliés à ladite ligne de signalisation selon la technique du ET câblé.

6.  Procédé de transmission desdits ordres de connexion et de déconnexion sur au moins une ligne (12) de signalisation d'un réseau domotique selon l'une quelconque des revendications 1 à 5, caractérisé en ce que lesdits ordres sont transmis en mode asynchrone et en bande de base, sous la forme de messages constitués d'une série de mots (41, 43, 44, 45, 46, 42) binaires successifs comprenant chacun :

    – un bit de début de mot ("Start") (31) ;

    – n bits utiles (33) ;

    – un bit délimiteur de message (34) ;

    – un bit de fin de mot ("Stop") (32) ;

et en ce que l'accès audit réseau se fait de façon spontanée, avec détection des collisions par comparaison de chaque mot reçu avec le mot émis.

7. Procédé selon la revendication 6, caractérisé en ce que chacun desdits mots comprend 11 bits, dont 8 bits utiles (33).

8. Procédé selon l'une quelconque des revendications 6 ou 7, caractérisé en ce que lesdits messages comprennent un premier mot (41) et un dernier mot (42) dont le bit délimiteur est égal à une première valeur binaire, les autres mots compris entre lesdits premier et dernier mots ayant leur bit délimiteur égal à la valeur binaire complémentaire de ladite première valeur binaire,

et en ce que ladite série de mots (41, 43, 44, 45, 46, 42) constitutifs d'un message est émise en série, avec un temps d'attente entre lesdits mots nul ou inférieur au temps de transfert d'un desdits mots.

9. Procédé selon l'une quelconque des revendications 6 ou 8, caractérisé en ce qu'un temps de garde, compris entre le temps de transfert d'un mot et le temps de transfert de deux mots, est ménagé avant et après l'émission de chacun desdits messages.

10. Procédé selon l'une quelconque des revendications 6 à 9, caractérisé en ce qu'il comprend des moyens de détection des collisions et/ou des moyens de détection des erreurs de transmission, par analyse d'un mot de contrôle présent dans chacun desdits messages, pilotant des moyens d'émission prioritaire d'un mot spécifique ("Abort"), demandant la réémission du message mal reçu.

Fig. 1

Fig. 2

Fig. 3    31    33    34    32

Fig. 4